# EUROPÄISCHE PATENTSCHRIFT

(11) **EP 1 395 853 B1**
(45) Veröffentlichungstag und Bekanntmachung des Hinweises auf die Patenterteilung: **19.10.2005**
(21) Anmeldenummer: 02735049.5
(22) Anmeldetag: 18.04.2002
(51) Int. Cl.: G01S 17/08, G01B 13/20

(54) **VORRICHTUNG ZUR OPTISCHEN DISTANZMESSUNG**
DEVICE FOR OPTICALLY MEASURING DISTANCES
DISPOSITIF DE MESURE OPTIQUE DE DISTANCES

(30) Priorität: 18.05.2001 DE 10124433
(43) Veröffentlichungstag der Anmeldung: 10.03.2004
(73) Patentinhaber: ROBERT BOSCH GMBH, 70442 Stuttgart (DE)
(72) Erfinder: STIERLE, Joerg, 71111 Waldenbuch (DE); WOLF, Peter, 70771 Leinfelden-Echterdingen (DE)
(86) Internationale Anmeldenummer: PCT/DE2002/001432
(87) Internationale Veröffentlichungsnummer: WO 2002/095446

(56) Entgegenhaltungen:
- DE-A- 3 545 827
- DE-A- 4 239 061
- DE-A- 19 840 049
- DE-C- 3 601 386
- US-A- 5 737 085

## Beschreibung

Die Erfindung geht aus von einer Vorrichtung zur optischen Distanzmessung nach dem Oberbegriff des unabhängigen Anspruchs.

Optische Entfernungsmessgeräte als solche sind seit geraumer Zeit bekannt. Diese Geräte senden einen modulierten Lichtstrahl aus, der auf eine gewünschte Zielfläche, deren Abstand zum Gerät zu ermitteln ist, ausgerichtet wird. Das von der angepeilten Zielfläche reflektierte oder gestreute Licht wird von dem Gerät teilweise wieder detektiert und zur Ermittelung des gesuchten Abstandes verwendet. Dabei unterscheidet man sogenannte Phasenmessverfahren und reine Laufzeitverfahren zur Bestimmung des gesuchten Abstandes. Bei den Laufzeitmessverfahren wird beispielsweise ein Lichtimpuls möglichst kurzer Impulsdauer von dem Gerät ausgesendet und dessen Laufzeit zum Target und wieder zurück ins Messgerät ermittelt. Mit dem bekannten Wert der Lichtgeschwindigkeit lässt sich daraus die Entfernung des Gerätes zum Target errechnen.

Bei den Phasenmessverfahren wird die Variation der Phase mit der durchlaufenen Strecke zur Bestimmung des Abstandes ausgenutzt. Über die Phasenverschiebung des rücklaufenden Lichtes im Vergleich zum ausgesendeten Licht lässt sich die vom Licht durchlaufene Strecke und damit der Abstand zum Zielobjekt bestimmen.

Der Anwendungsbereich derartiger Entfernungsmessgeräte umfasst Entfernungen im Bereich von einigen wenigen Millimetern bis zu einigen hundert Metern.

In Abhängigkeit von den zu messenden Laufstrecken und der Rückstrahlfähigkeit des Zielobjektes ergeben sich unterschiedliche Anforderungen an die Lichtquelle, die Qualität des Messstrahls und den Detektor.

Bei kürzeren Abständen - im Bereich bis zu einigen Metern - zu einem Ziel, dass zudem eine gute Rückstrahlfähigeit besitzt, wird man in vorteilhafter Weise einen wohlkollimierten, beugungsbegrenzten Lichtstrahl verwenden, um eine gute Ortsauflösung und ein entsprechend starkes rücklaufendes Signal zu erhalten.

Bei großen Entfernungen besteht das Problem, das gewünschte Ziel mit einem feinen Lichtstrahl, wie es ein fokussiertes, beugungsbegrenztes Laserstrahlbündel darstellt zu treffen, so dass die Verwendung eines Messstrahls mit einem größeren Durchmesser für diese Art der Anwendung von Vorteil ist.

Die aus dem Stand der Technik bekannten optischen Entfernungsmessgeräte lassen sich grundsätzlich entsprechend der Anordnung von Sende- und Empfangskanal in zwei Kategorien einteilen. Zum Einen gibt es Vorrichtungen, bei denen der Sendekanal neben dem Empfangskanal in einem gewissen Abstand angeordnet ist, so dass die jeweiligen oprischen Achsen parallel zueinander verlaufen. Zum Anderen gibt es monoaxiale Messvorrichtungen, bei denen der Empfangskanal koaxial zum Sendekanal verläuft.

Aus der DE 198 40 049 C2 ist eine monoaxiale Vorrichtung zur optischen Distanzmessung für geodätische, baugewerbliche und industrielle Verwendungszwecke bekannt, mit der sowohl stark als auch schlecht rückstrahlende Zielobjekte vermesssen werden können. Diese Vorrichtung besitzt zudem eine hohe Ortsauflösung auch bei schlecht rückstrahlenden Objekten.

Die Vorrichtung der DE 198 40 049 C2 weist eine Sendeeinheit mit einer oder zwei optischen Strahlungsquellen zur Erzeugung zweier trennbarer Strahlungsbündel auf. Ein Strahlungsbündel ist dabei beugungsbegrenzt und umfasst Licht im sichtbaren Wellenlängenbereich, wohingegen das andere Strahlenbündel divergent ist und im sichtbaren oder infraroten Wellenlängenbereich liegt.

Nachteilig an der Vorrichtung der DE 198 40 049 C2 ist die aufwendige Erzeugung der unterschiedlichen Messstrahlen. Je nach Ausführungsart benutzt das Gerät zwei getrennte Laserdioden oder einen Zwei-Wellenlängen-Laser zur Erzeugung der beiden Messstrahlen. Die unterschiedlichen StrahLdivergenzen werden durch aufwendige Teleskop-Optiken in den beiden Strahlengängen dieser Vorrichtung erzeugt. Zudem benötigt das Gerät der DE 198 40 049 C2 Selektionsmittel für die Detektion der unterschiedlichen, koaxialverlaufenden Strahlungsarten und Strahlungsbündel. Die in der DE 198 40 049 C2 erwähnten Selektionsmittel, wie beispielsweise optischen Filter, steuerbaren Frequenzverdoppler und Q-Switcher stellen aufwendige und teuere optische Komponenten dar, die das Messsystem sehr komplex, unhandlich und teuer machen.

Biaxiale Messsysteme haben demgegenüber den Vorteil, dass es einer aufwendigen Strahlteilung nicht bedarf, so dass ein optisches Übersprechen aus dem Sendekanal direkt in den Empfangskanal besser unterdrückt werden kann.

Andererseits besteht bei biaxialen Entfernungsmessgeräten der Nachteil, dass es für den Bereich kurzer Messentfernungen aufgrund einer Parallaxe zu Detektionsproblemen kommen kann: Die Abbildung des Zielobjektes auf die Detektoroberfläche, die für große Zielentfernungen noch eindeutig auf dem Detektor liegt, wandert mit kürzer werdender Messentfemung zunehmend von der optischen Achse des Empfangsastes weg und führt zu einer Variation des Strahlquerschnittes in der Detektorebene.

Andererseits besteht bei biaxialen Entfernungsmessgeräten der Nachteil, dass es für den Bereich kurzer Messentfernungen aufgrund einer Parallaxe zu Detektionsproblemen kommen kann: Die Abbildung des Zielobjektes auf die Detektoroberfläche, die für große Zielentfernungen noch eindeutig auf dem Detektor liegt, wandert mit kürzer werdender Messentfernung zunehmend von der optischen Achse des Empfangsastes weg und führt zu einer Variation des Strahlquerschnittes in der Detektorebene.

Aus der DE 35 45 827 A1 ist ein Verfahren und Gerät zum laseroptischen Vermessen von kooperaüven Objekten, insbesondere für die Schusssimulation bekannt, bei dem durch Aussenden eines Laserstrahls und Auswerten des am Objekt reflektierten Echos, auf eine Trefferquote bei der Schusssimulation geschlossen werden kann. Um die Größe des Strahlquerschnitts den Zielverhältnissen innerhalb begrenzter Entfernungsspannen anpassen zu können, werden bei dem Verfahren der DE 35 45 827 A1 innerhalb eines zusammenhängenden Messvorganges mehrere gleichartige Einzelmessungen mit unterschiedlichen Strahldivergenzen durchgeführt, die jeweils unterschiedlichen Entfernungsspannen zugeordnet sind. Dazu ist in einer Vorrichtung gemäß der DE 35 45 827 A1 im Strahlengang des Laserstrahlsenders ein brennweitenveränderliches Objektiv mit Antrieb zur raschen Verstellung angeordnet. Ein Laser sendet einen Laserstrahl aus, in dessen Strahlengang eine die Brennweite des Objektivs beeinflussende Vorrichtung, in Form eines transparenten Kugelelementes liegt. Unter dem Einfluss einer Antriebseinheit wird diese Vorrichtung in Richtung der optischen Achse regelmäßig mit einer Frequenz zwischen vorzugsweise 10 und 100 Hz verfahren. Die optischen Eigenschaften der Gesamtanordnung sind in jedem Zeitpunkt der Schwingungsperiode der schwingenden Vorrichtung bekannt, sodass somit auch die Divergenz des erzeugten Laserstrahls in jedem Augenblick bekannt ist.

Aus der DE 36 01 386 C1 ist ein Verfahren und eine Vorrichtung zum Eichen von optischen Entfernungsmessern bekannt, wobei ein Lichtstrahl von einem Sender auf ein reflektierendes Ziel gerichtet wird und die Phasendifferenz des von ihm reflektierten Lichtstrahls von einem neben dem Sender angeordneten Empfänger bezüglich des ausgesandten Lichtstrahls gemessen wird. Zwischen dem Sender und dem Ziel ist ein Filter angeordnet, dessen Abstand vom Sender eine Funktion der bei einer bestimmten Nebeldichte herrschenden Sichtweise ist. Der Transmissionsgrad und der Streufaktor dieses Filters können als Funktion des Abstandes und des Zieles vom Sender bzw. des Filters vom Sender eingestellt werden. Darüber hinaus kann durch ein Objektiv die Divergenz des Lichtstrahls als Funktion der Sichtweite eingestellt werden. Dazu ist zwischen dem Laser und dem Filter ein die Divergenz des Laserstrahls veränderndes Objekt in Form eines Zoom-Objektivs vorgesehen, mit dem die Divergenz des Laserstrahls entsprechend der vom Nebel erzeugten Aufstreuung des Strahls eingestellt werden kann.

### Vorteile der Erfindung

Die erfinderische Vorrichtung zur optischen Distanzmessung mit den Merkmalen des unabhängigen Anspruchs 1 hat demgegenüber den Vorteil, dass das im Distanzmesser erzeugte Strahlungsbündel auf die unterschiedlichen Messaufgaben (das heißt unterschiedliche Zielobjekte oder Zielentfernungen, die es zu vermessen gilt) mit lediglich einem optischen Mittel angepasst werden kann. Insbesondere lässt sich die Divergenz und die Richtung des Messstrahls mit diesem einen optischen Mittel der jeweiligen Messanforderung anpassen.

Zwei getrennte, unterschiedliche Strahlengänge zur Bereitstellung von Strahlenbündeln unterschiedlicher Divergenz sind in der erfindungsgemäßen Vorrichtung nicht notwendig. Dies ermöglicht in vorteilhafter Weise beispielsweise ein kompaktes, handgehaltenes Messgerät.

Die unterschiedlichen Strahldivergenzen des Messstrahlbündels lassen sich durch einfache Veränderung der relativen Anordnung von Lichtquelle und einem optischen Mittel errreichen.

Dazu weist die erfindungsgemäße Vorrichtung ein Regelwerk auf, welches die relative Anordnung des mindestens einen optischen Mittels und der Lichtquelle steuert, wobei zumindest ein Sensor vorhanden ist, der einen oder mehrere Parameter aus einer Gruppe von physikalischen Parametern, die zumindest die Strahldivergenz, die Strahlrichtung, den Strahlbündeldurchmesser des Messsignals bzw. den Strahlbündeldurchmesser des rücklaufenden Messsignals enthält, detektiert und an der Regelwerk zur Steuerung weiterleitet.

Vorteilhafte Ausführungen der erfindungsgemäßen Vorrichtung ergeben sich aus den Unteransprüchen.

In einer ersten vorteilhaften Ausführungsform des erfindungsgemäßen Entfernungsmessgerätes ist das eingesetzte optische Mittel eine Linse oder Linsenkombination, die als Objektiv dient und beispielsweise in den Strahlengang der Sendeeinheit des Messgerätes eingebracht ist. Andere optische Mittel sind ebenfalls vorstellbar und sollen später beschrieben werden.

In vorteilhafter Weise lässt sich die erfindungsgemäße Vorrichtung zur optischen Distanzmessung durch die Verwendung eines Lasers als Lichtquelle realisieren. Heutzutage gibt es diverse miniaturisierte Laser, die sich in derartige Messgeräte einbauen lassen. Besonders vorteilhaft bieten sich hierfür aufgrund ihrer geringen Größe und hohen Leistungsfähigkeit Halbleiterlaser an, die mittlerweile in ensprechender Qualitiät auch für sichtbaren Teil des Spektrums elektromagnetischer Wellen vorhanden sind.

Zur Erzeugung eines kollimierten, beugungsbegrenzten Messstrahlbündels wird die Lichtquelle in den gegenstandsseitigen Fokus des Objektives gesetzt. Das aus der Lichtquelle austretende, divergente Strahlenbündel ist nach Durchlaufen des Objektives kollimiert und bildet einen weitgehend parallelen Messstrahl, der beispielsweise für die Abstandsmessung mit hoher Ortsauflösung verwendet werden kann.

Wird ein Messstrahlbündel mit vergößerter Divergenz benötigt, weil größere Messentfernungen bestimmt werden müssen, so kann in der erfindungsgemäßen Vorrichtung die Objektivlinse in Richtung der optischen Achse des Messsignals verfahren werden, um die gewünschte Divergenz des Messstrahlbündels zu variieren und einzustellen.

In der erfindungsgemäßen Vorrichtung lässt sich so beispielsweise zuerst mit einem divergenten Strahlenbündel arbeiten, um das Gerät auf ein weit entferntes Zielobjekt auszurichten und nach dem Auftreffen des Messstrahlbündels auf dem Zielobjekt kann der Messstrahl beugungsbegrenzt rekollimiert werden, um eine gute Ortsauflösung und ein deutlich messbares rücklaufendes Signal ins Messgerät zu erzielen.

Zur Variation der Strahldivergenz wird die Objektivlinse über verschiedene Akuatoren, die von einem Regelwerk gesteuert werden in Ihrer Position verstellt.

In einer weiteren Ausführungsform der erfindungsgemäßen Vorrichtung lässt sich die Position der Lichtquelle über entsprechende Akuatoren und einen zugehörigen Regelkreis gegenüber einer dann gegebenenfalls fixen Kollimationsoptik verändern.

Die Steuerung der Aktuatoren, die die relative Anordnung von Objektiv und Lichtquelle verändern können, erfolgt in einer Ausführungsform des Gerätes manuell in der Art, dass der Bediener den Messstrahl zuerst beispielsweise über einen Knopfdruck am Bedienelement des Gerätes aufweitet und auf das Zielobjekt ausrichtet, bis ihm das Gerät ein rücklaufendes Signal anzeigt. Anschließend kann der Bediener dann den gewünschten Kollimationsgrad der Messstrahlung einstellen, um so beispielsweise eine erhöhte Ortsauflösung oder ein entsprechend vergrößertes Empfängersignal zu erhalten. Punktgenaues Messen ist so durch die Verkleinerung des Messflecks möglich ohne die Nachteile, die ein kleiner Messfleck für das Anpeilen eines beispielsweise weit entfernten Zielobjektes darstellt.

In einer weiteren vorteilhaften Ausführungsform des erfindungsgemäßen Messgerätes wird die Ansteuerung der Aktuatoren für das optische Mittel, das beispielsweise ein Objektiv sein kann durch einen selbststeuernden Regelkreis übernommen. Sensoren am oder im Messstrahlbündel detektieren den Strahldurchmesser oder die Divergenz des Bündels und geben diese Information an ein automatisches Regelwerk weiter. Dieses Regelwerk steuert dann in gewünschter Weise die Aktuatoren, die für eine Verschiebung des Objektives und/oder auch der Lichtquelle sorgen. Wird von den Sensoren die gewünschte oder benötigte Strahldivergenz detektiert, wird die weitere Verschiebung des optischen Elementes gestoppt.

Neben der Divergenz des Messstrahlbündels lässt sich mit der erfindungsgemäßen Vorrichtung ebenfalls die Position des Lichtstrahls variieren. Durch Verschiebung des Objektives senkrecht zur optischen Achse lässt sich der Messstrahl ablenken, um so beispielsweise einen gewissen Winkelbereich mit einem kollimierten Lichtstrahl zu überstreichen.

In einer vorteilhaften Ausführungsform der erfindungsgemäßen Vorrichtung ist daher ein "Scan-Modus" vorgesehen, der es erlaubt den Messstrahl durch entsprechend schnelle Verschiebung der Objektivlinse in horizontaler und/oder vertikaler Richtung über einen Winkelbereich abzulenken. Diese Ausgestaltung der erfindungsgemäßen Vorrichtung gestattet es in vorteilhafter Weise kleine oder weit entfernte Zielobjekte zu lokalisieren. Durch einen automatisierten Regelkreis, wie er beispielsweise zuvor beschrieben worden ist, lässt sich erreichen, dass der Scan-Modus gestoppt wird, wenn die Empfangseinheit des Messgerätes ein rücklaufendes Signal detektiert. Das Regelwerk kann dann das Objektiv so einrichten, dass beispielsweise ein maximales Rücklaufsignal gemessen wird.

In einer weiteren vorteilhaften Ausgestaltung der erfindungsgemäßen Vorrichtung befindet sich ein entsprechendes optisches Mittel im Empfangsast des Messgerätes. Typischerweise befindet sich bei Geräten des Standes der Technik eine Sammellinse im Empfangsast des Abstandsmessgerätes. Diese Linse sammelt das rücklaufende Licht auf und fokussiert es zur Erhöhung der Leistungsdichte auf einen Detektor. Dazu ist diese Kollimationslinse im Abstand ihrer Brennweite vor dem Detektor angeordnet, um Licht aus großer Entfernung exakt auf den Detektor zu fokussieren.

Wird als erfindungsgemäßes, optisches Mittel ein Objektiv in den Empfangsstrahlengang eingebracht, das sich in beschriebener Weise relativ zum Detektor und somit auch relativ zur Lichtquelle verstellen lässt, so ist es möglich, die Fokussierung des rücklaufenden Strahls zu korrigieren. Im Speziellen lässt sich mit dieser Ausführungsform der erfindungsgemäßen Vorrichtnung das Parallaxen-Problem von biaxialen Messgeräten beheben.

In biaxialen Messgeräten gibt es aufgrund einer räumlichen Trennung zwei getrennte, meist parallele optische Achsen für das Sendesignal und für den Empfangsstrahl. Neben der oben bereits beschriebenen Abhängigkeit der Fokussierung - und damit auch der der Fokusgröße auf dem Detektor - vom Abstand des Zielobjektes zum Messgerät kommt es auch zu einer lateralen Verschiebung des rücklaufenden Strahlenbündels relativ zur optischen Achse des Empfangsastes. Diese laterale Verschiebung kann so groß werden, dass für sehr kleine Abstände zum Zielobjekt das rücklaufende Signal nicht mehr oder nur unzureichend auf den Detektor fällt.

Durch eine laterale Verschiebung der Optik im Empfangsast kann dieser Parallaxen-bedingte Strahlversatz ausgeglichen werden und beispielsweise das erfindungsgemäße Messgerät auf ein Detektionsmaximum für die rücklaufende Strahlung eingestellt werden.

Die Variation der Position der Linse lässt sich in vorteilhafter Weise wieder über einen automatische Regelkreis erreichen, der über Sensoren beispielsweise die Signalstärke auf dem Detektor bestimmt und die Aktuatoren derart ansteuert, dass sich beispielsweise ein Maximum für das detektierte Signal ergibt.

### Zeichnung

In der Zeichnung ist ein Ausführungsbeispiel der erfindungsgemäßen Vorrichtung dargestellt, das in der nachfolgenden Beschreibung näher erläutert werden soll.

Es zeigen:
Figur 1 die schematische Aufsicht auf ein Ausführungsbeispiel der erfindungsgemäßen Vorrichtung,
Figur 2 ein Detail aus dem optischen Strahlengang der erfindungsgemäßen Vorrichtung
   und
Figur 3 eine schematische Darstellung eines möglichen Regelkreises der erfindungsgemäßen Vorrichtung.

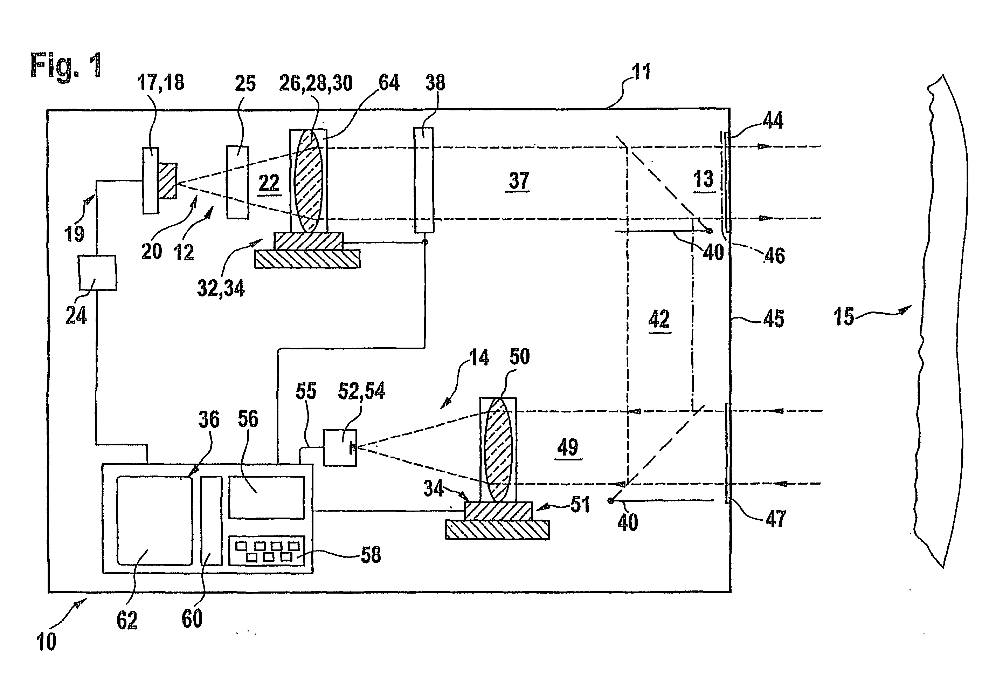

In der Figur 1 ist in schematischer Weise ein erfindungsgemäßes Entfernungsmessgerät mit den wichtigsten Komponenten zur Beschreibung seiner Funktion dargestellt.

Das erfindungsgemäße Gerät 10 weist ein Gehäuse 11 auf, in dem eine Sendeeinrichtung 12 zur Erzeugung eines Messsignals 13 sowie eine Empfangseinrichtung 14 zur Detektion des von einem Zielobjekt 15 rücklaufenden Messsignals 16 untergebracht sind.

Die Sendeeinrichtung 12 beinhaltet eine Lichtquelle 17, die im Ausführungsbeispiel der Figur 1 durch eine Halbleiterlaserdiode 18 realisiert ist. Die Verwendung anderer Lichtquellen in der erfindungsgemäßen Vorrichtung ist ebenso möglich. Die Laserdiode 18 sendet einen Laserstrahl 20 in Form eines für das menschliche Auge sichtbaren Lichtbündels 22 aus.

Die Laserdiode 18 wird über ein Steuergerät 24 betrieben, das durch eine entsprechende Elektronik eine Modulation des elektrischen Eingangssignals 19 auf die Diode 18 erzeugt. Durch eine derartige Modulation beispielsweise des Diodenstroms lässt sich erreichen, dass das Messsignal 13 zur Entfernungsbestimmung ebenfalls in gewünschter Weise moduliert ist.

Der aus der Diode 18 autretende Laserstrahl 20 durchläuft im Ausführungsbeispiel eine erste Optik 25, die das im Allgemeinen schlechte Strahlprofil der Laserdiode verbessert. Diese erste Optik 25 kann beispielsweise aus einer Zylinderlinse oder auch aus einer Kombination mehrerer Linsen und Blenden bestehen und soll hier nicht weiter beschrieben werden. Eine solche Optik kann auch Bestandteil der Laserdiode sein.

Das Laserstrahlbündel 20 durchläuft anschließend eine Kollimationsoptik 26, in Form eines Objektivs 28, das in der Figur 1 in Form einer einzelnen Linse 30 dargestellt ist. Das Objektiv 28 befindet sich auf einer Verstellmimik 32, die eine Änderung der Position des Objektives in allen drei Raumrichtungen ermöglicht. Dazu sind eine Mehrzahl von Akuatoren 34 beispielsweise mit Verstellelementen gekoppelt, die ein Verfahren des Objektives sowohl entlang der optischen Achse der Sendeeinrichtung, als auch in die beiden dazu orthogonalen Raumrichtungen ermöglichen. Die Aktuatoren 34 werden über ein Regelwerk 36 betätigt, das später im Detail beschrieben werden soll.

Nach Durchlaufen des Objektivs 28 ergibt sich beispielsweise ein amplitudenmoduliertes Messsignal 13 in Form eines parallelen Lichtbündels 37, wie es in Figur 1 schematisch dargestellt ist. Das Lichtbündel durchläuft innerhalb des Gerätes 10 einen Sensor 38, der Informationen, beispielsweise über den Strahldurchmesser, die Divergenz und die genauer Richtung des Laserstrahls aufnehmen kann. Dieser Sensor kann auch eine Kombination verschiedener Detektoren sein. Der Sensor 38 ist ebenfalls mit dem Regelwerk 36 verbunden.

Alternativerweise kann auch ein Teil des Lichtbündels 37 über einen Strahlungsteiler, der in den Strahlengang des Messsignals 13 eingebracht wird, ausgekoppelt und auf einen entsprechenden nichttransmissiven Sensor umgeleitet werden.

Denkbar ist es auch, anstelle der Sensoren 38 im optischen Strahlengang, Sensoren zur Erfassung der Position der Verstellmimik 32 einzusetzen, um so eine definierte Änderung der Strahlparameter des Messstrahlbündels durchzuführen.

Dabei wäre dann eine Messung der aktuellen Strahlparameter zwar nicht mehr möglich, diese ließen sich aber aus den Ausgangsdaten der Laserdiode und der aktuellen Position der Kollimationsoptik 26 jeweils berechnen.

Im Sendeast der erfindungsgemäßen Vorrichtung befindet sich zudem noch eine vorzugsweise schaltbare Strahlumlenkung 40, die es gestattet, das Messsignal 13 unter Umgehung eines Zielobjektes direkt auf die Empfangseinheit 14 des Geräts 10 umzulenken. Auf diese Weise ist es möglich, eine geräteinterne Referenzstrecke 42 zu erzeugen, die eine Kalibrierung des Messsystems gestattet.

Soll eine Messung durchgeführt werden, so verlässt der Messstrahl 13 das Gehäuse 11 der erfindungsgemäßen Vorrichtung durch ein optisches Fenster 44 in der Stirnwand 45 des Gerätes 10. Die Öffnung des optischen Fensters kann durch einen Shutter 46 gesichert werden.

Zur Messung wird das Messgerät 10 auf ein Zielobjekt 15 ausgerichtet, dessen Entfernung zum Messgerät ermittelt werden soll. Das an dem gewünschten Zielobjekt 15 reflektierte oder auch gestreute Signal 16 bildet einen rücklaufenden Messstrahl 49, der zu einem gewissen Teil wieder zum Messgerät 10 zurück gelangt. Durch ein Eintrittsfenster 47 in der Stirnseite 45 des Gerätes 10 wird die rücklaufende Messstrahlung 49 in das Messgerät eingekoppelt und im Ausführungsbeispiel der Figur 1 auf eine Empfangsoptik 50 gelenkt. Die Empfangsoptik 50, die im Ausführungsbeispiel der Figur 1 ebenfalls durch eine einzelne Linse symbolisiert ist, befindet sich gleichfalls auf einer Verstellmimik 51, die in analoger Weise zu der Verstellmimik 32 des Objektivs 28 im Sendeast des Gerätes 10 aufgebaut ist. Die Verstellmimik 51 ist wiederum mit dem Regelwerk 36 verbunden.

Die Empfangsoptik 50 bündelt das rücklaufende Messignal 49 auf einen Empfangsdetektor 52, der im Ausführungsbeispiel der Figur 1 in Form einer Photodiode 54 gegeben ist und das einkommende Lichtsignal 49 in ein elektrisches Signal 55 wandelt. Der Empfangsdetektor 52 der erfindungsgemäßen Vorrichtung kann auch als Photomultiplier oder als räumlich auflösender Flächendetektor, wie beispielsweise eine CCD-Kamera oder auch entsprechend anderen, dem Fachmann geläufigen Detektionsystemen für optische Strahlung ausgelegt sein. Der Empfangsdetektor 52 ist über eine elektrische Verbindung 55. mit dem Regelwerk 36 verbunden.

Das Regelwerk 36 verfügt im Ausführungsbeispiel der Figur 1 über eine Bedieneinheit 58 zur Eingabe von Daten und Messaufgaben, eine Steuer- und Auswerteeinheit 56, eine zentrale Recheneinheit 60 zur Verarbeitung der anfallenden Informationen und über eine Anzeigevorrichtung 62. Das Regelwerk kann sowohl manuell bedient werden, oder zu einem vollständig automatisierten Regelkreis (39) geschlossen werden.

Auf weitere im Messgerät vorhandene Komponenten, die aber für das Verständnis der erfindungsgemäßen Vorrichtung nicht notwendig sind, soll in diesem Zusammenhang nicht weiter eingegangen werden.

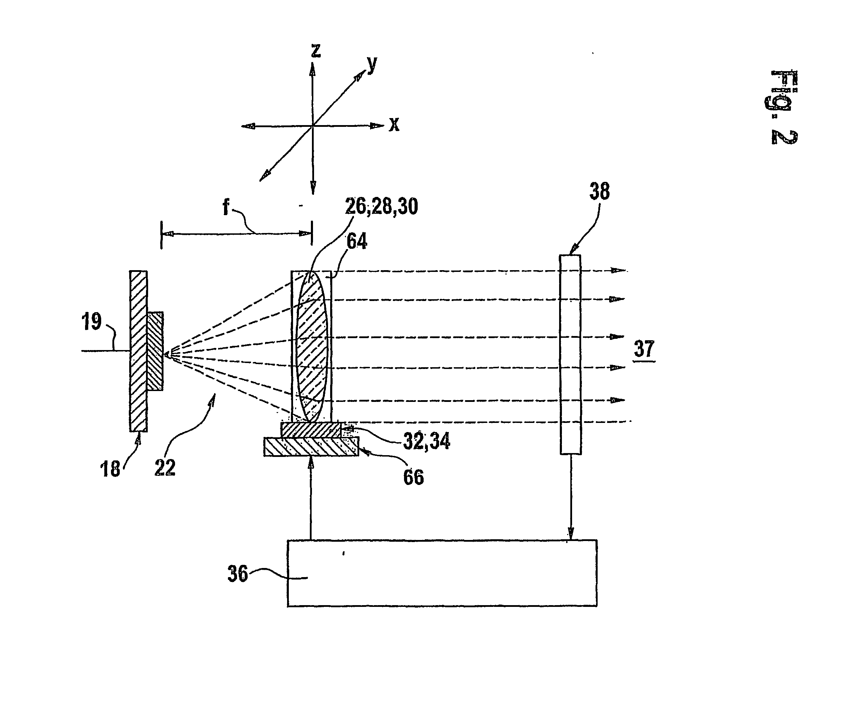

In Figur 2 ist ein Teil des Strahlenganges der Sendeeinrichtung 12 der erfindungsgemäßen Vorrichtung im Detail dargestellt. Eine entsprechende Einrichtung kann sich auch im Empfangsast des Messgerätes 10 befinden.

Eine Laserdiode 18, in die eine Optik 25 zur Modifikation des Strahlprofils des emittierten Laserstrahls integriert ist, wird durch ein elektrisches Signal 19 angesteuert und sendet ein divergentes Strahlenbündel 22 aus. Das Strahlenbündel 22 durchläuft anschließend eine Kollimationsoptik 26 in Form eines Objektivs 28, dass in Normalstellung im Abstand seiner Brennweite f von der Lichtquelle 18 angeordnet ist. Das Objektiv 28 sitzt in einer Verstellmimik 32, die es gestattet, den Abstand zwischen Lichtquelle 18 und dem Objektiv 28 des Messgerätes 10 über Aktuatoren 34 in definierter Weise zu ändern (x-Richtung). Darüberhinaus ermöglicht die Verstellmimik 32, das Objektiv in den beiden, zur optischen Achse'der Sendeeinheit 12 orthogonalen Richtungen y und z zu verschieben. Dazu sitzt das Objektiv 28 in einer Halterung 64, die relativ zu einem Befestigungselement 66 bewegt werden kann. Über das Befestigungselement 66 ist die Verstellmimik 32 im Messgerät 10 fixiert.

Die Verstellmimik 32 besteht beispielsweise aus drei, orthogonal zueinander angeordneten Translationstischen, die jeweils durch eine Schrittmotorsteuerung bewegt werden können und so eine Verschiebung der Objektivlinse 28 in diesen drei Richtungen ermöglicht. Die Schrittmotoren zur Steuerung der Translation werden über die Steuer- und Auswerteeinheit 56 des Regelwerkes 36 angesteuert. Möglich sind aber auch Piezoantriebe zur Steuerung der Translationsbewegung. So lässt sich in einfacher Weise beispielsweise durch die Veränderung des Abstandes der Kollimationsoptik 26 zur Lichtquelle 18 ein der Messaufgabe angepasstes, divergentes beziehungsweise konvergentes oder auch paralleles Messstrahlbündel erzeugen.

Die aktuell vorliegende Divergenz des Messstrahlbündels wird über einen, Sensor 38, der im Ausführungsbeispiel der Figur 2 in Transmission betrieben wird, detektiert und diese Information an die Steuer-'und Auswerteeinheit 56 des Regelwerks weitergeleitet und ermittelt, inwieweit die vorliegende Divergenz verändert werden soll. Die Steuer- und Auswerteeinheit 56 gibt diese Information an die Aktuatoren 34 weiter, die für eine weitere Verschiebung der Optik 28 oder aber für ein Ende der Verschiebung sorgen. In diesem Fall wird die Einstellung der Kollimationsoptik 36 automatisch durch den geschlossenen Regelkreis 39 durchgeführt.

Durch das entsprechende Verschieben der Kollimationsoptik 26 in einer Ebene (y-z-Ebene) senkrecht zur ursprünglichen optischen Achse lässt sich das Messstrahlbündel 37 umlenken. Der Grad dieser Umlenkung wird wiederum durch den Sensor 38 detektiert und an die Steuer- und Auswerteeinheit 56 weitergeleitet, die diese Informationen an die Aktuatoren 34 weitergibt. Im Speziellen ist mit diesem Regelkreis ein "Scan-Betrieb" des erfindungsgemäßen Messgerätes 10 möglich, der durch eine schnelle oszillatorische Bewegung der Aktuatoren den Messstrahl 13 über einen bestimmten Winkelbereich ablenkt. Wird auf dem Detektor 52 des Messgerätes 10 ein rücklaufendes Signal 49 detektiert, so kann die Amplitude des Scanwinkels sukzessive verkleinert werden oder aber der Scan-Modus des Gerätes kann ganz abgeschaltet werden. Dies kann ebenfalls in einer automatisierten Form durch den Regelkreis 39 des Messgerätes durchgeführt werden.

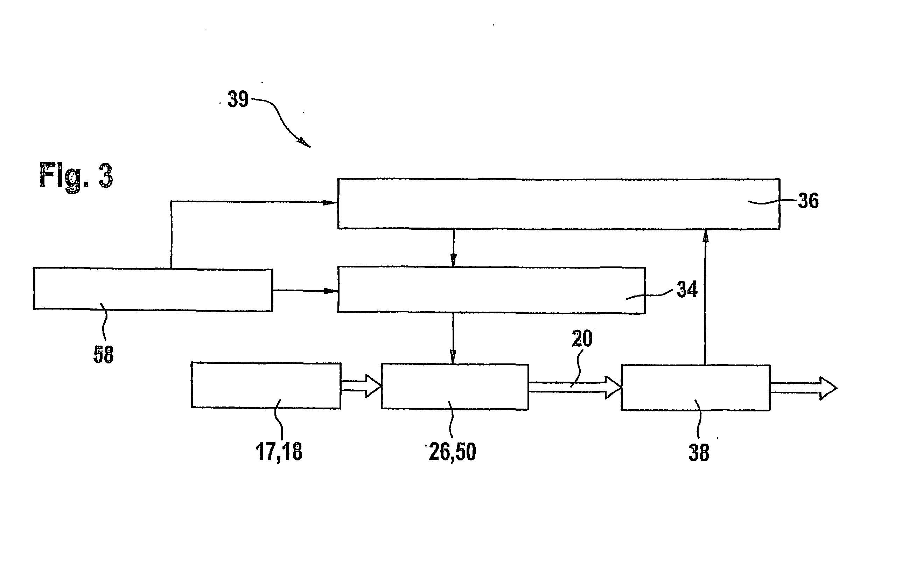

In Figur 3 ist in schematischer Weise ein Regelkreis 39 für das erfindungsgemäße Messgerät 10 dargestellt.

Ausgehend von der Lichtquelle 18 wird ein Messstrahlbündel 22 durch eine Kollimationsoptik 26 geleitet. Wesentliche physikalische Parameter dieses Messstrahlbündels, wie beispielsweise die Strahldivergenz, der Strahldurchmesser oder die Strahlrichtung werden von Sensoren 38 detektiert und an ein Regelwerk 36 weitergeleitet. Eine Steuer- und Auswerteeinheit 56 innerhalb des automatischen Regelkreises 39 vergleicht die aktuell vorliegenden Strahlparameter mit den gewünschten Parametern und gibt entsprechende Befehle an die Aktuatoren 34 einer Verstellmimik 32 weiter, die die Verschiebung der Kollimationsoptik 26 nach den Vorgaben der Steuer- und Auswerteeinheit 56 vornehmen.

Wird eine solche Kollimationsoptik in den Empfangsast des Messgerätes 10 eingesetzt, so lässt sich damit beispielsweise eine Optimierung des detektierten Messsignals 49 erreichen, indem der automatische Regelkreis 39 solange die Position des Objektivs 50 anpasst, bis ein optimales Signal auf dem Empfänger 52 des Messgerätes 10 vorliegt. Dazu wird beispielsweise die Höhe des Empfangssignals 49 auf der Photodiode 54 an den Regelkreis 39 weitergeleitet (Siehe Figur 1) und die Kollimationsoptik 50 so eingeregelt, dass das rücklaufende Messsignal 49 auf. dem Detektor 52 maximiert ist. Durch eine laterale Verschiebung der empfangsseitigen Kollimationsoptik 50 lässt sich somit das Parallaxen-Problem biaxialer Messgeräte beheben.

In analoger Weise zu der beschriebenen automatischen Einstellung durch einen geschlossenen Regelkreis 39 lässt sich in einfacher und vorteilhafter Weise auch eine manuelle Einstellung der Aktuatoren 34 der Verstellmimik 32 beziehungsweise 51 ermöglichen. Dazu wird der automatische Regelkreis 39 unterbrochen und die Aktuatoren 32 der Verstellmimik mittels des Regelwerkes 36 über entsprechende Bedienelemente 58 des Messgerätes 10 vom Benutzer aktiviert.

Auf diese Weise lässt sich beispielsweise in einfacher Art durch Variation der Strahldivergenz ein entfernt liegendes Zielobjekt sicher vermessen, indem man zuerst mit einem stark aufgeweitetem Lichtbündel arbeitet um das Zieobjekt zu treffen und dann, sobald ein Messsignal auf dem Detektor des Messgerätes vorliegt, zu einem beugungsbegrenzten Strahlenbündel übergeht, das eine gute Ortsauflösung und eine starkes Empfangssignal gewährleistet.

Die erfindungsgemäße Vorrichtung ist nicht auf das in der Beschreibung vorgestellte Ausführungsbeispiel begrenzt.

So lässt sich in analoger Weise auch alternativ die Position der Lichtquelle 17 varrieren, wenn die Kollimationsoptik 26 nicht bewegt werden soll oder kann.

Auch ist es möglich, dass zusatzlich zu der Kollimationsoptik 26 beziehungsweise 50 im erfindungsgemäßen Messgerät 10 eine Lichtleitfaser als optisches Mittel zur Strahlführung eingesetzt wird. Die Position dieser Lichtleitfaser kann dann relativ zur Kollimationsoptik 28 oder 50 und /oder der Lichtquelle 17 variert werden, so dass sowohl die Lichtquelle 17, als auch die Kollimationsoptik selbst nicht bewegt werden brauchen.

## Patentansprüche

1. Vorrichtung zur optischen Distanzmessung mit einer Sendeeinheit (12) mit einer Lichtquelle (17, 18) zur Aussendung optischer Strahlung (13, 20, 22) auf ein Zielobjekt (15) hin, mit einer Empfangseinheit (14) zum Empfang der vom Zielobjekt (15) rücklaufenden optischen Strahlung (16, 49) und mit einer Steuer- und Auswerteeinheit (56) zur Ermittlung der optischen Distanz der Vorrichtung zum Zielobjekt (15) sowie mit mindestens einem optischen Mittel zur Strahlführung (26, 28, 30, 50) der optischen Strahlung, wobei die relative Anordnung des mindestens einen optischen Mittels zur Strahlführung (26, 28, 30, 50) und der Lichtquelle (17, 18) zueinander variierbar ist, **dadurch gekennzeichnet, dass** die Vorrichtung ein Regelwerk (36) umfasst, welches die relative Anordnung des mindestens einen optischen Mittels (26, 28, 30, 50) und der Lichtquelle steuert, wobei die Vorrichtung zumindest einen Sensor (38) umfaßt, der zumindest einen Parameter aus einer Gruppe von Parametern, die aus der Strahldivergenz, der Strahlrichtung und dem Strahlbündeldurchmesser sowohl des ausgesendeten optischen Strahlung (13,37) als auch der rücklaufenden optischen Strahlung (16,49) besteht, detektiert und an der Regelwerk (36) weiterleitet.

2. Vorrichtung nach Anspruch 1, **dadurch gekennzeichnet, dass** die relative Anordnung des mindestens einen optischen Mittels (26, 28, 30, 50) und der Lichtquelle (17, 18) in allen drei Raumrichtungen einstellbar ist.

3. Vorrichtung nach Anspruch 2, **dadurch gekennzeichnet, dass** das mindestens eine optische Mittel (26, 28, 30, 50) ein Objektiv (28) aufweist.

4. Vorrichtung nach Anspruch 3, **dadurch gekennzeichnet, dass** das Objektiv (28) im Strahlengang der Sendeeinheit (12) und im Strahlengang der Empfangseinheit (14) angeordnet ist.

5. Vorrichtung nach Anspruch 3, **dadurch gekennzeichnet, dass** das Objektiv (28) im Strahlengang der Sendeeinheit (12) oder im Strahlengang der Empfangseinheit (14) angeordnet ist.

6. Vorrichtung nach einem der Ansprüche 1-5, **dadurch gekennzeichnet, dass** zumindest ein Parameter, aus einer Gruppe von Parametern, die sowohl aus der Divergenz und der Richtung der auf ein Zielobjekt (15) hin ausgesandten optischen Strahlung (13,37) als auch aus der Divergenz und der Richtung der vom Zielobjekt (15) rücklaufenden optischen Strahlung (16, 49) besteht, durch die Änderung der relativen Anordnung des mindestens einen optischen Mittels zur Strahlführung (26, 28, 30, 50) und der Lichtquelle (17, 18) zueinander, variierbar ist.

7. Vorrichtung nach Anspruch 3, **dadurch gekennzeichnet, dass** die Position des Objektivs (28) gegenüber der Position der Lichtquelle (17, 18) über Aktuatoren (34) einstellbar ist.

8. Vorrichtung nach Anspruch 1, **dadurch gekennzeichnet, dass** das Regelwerk (36) manuell steuerbar ist.

9. Vorrichtung nach Anspruch 1, **dadurch gekennzeichnet, dass** das Regelwerk (36) Bestandteil eines automatischen Regelkreises (39) ist.

10. Vorrichtung nach einem der vorhergehenden Ansprüche, **dadurch gekennzeichnet, dass** die Lichtquelle (17, 18) ein Laser, insbesondere eine Laserdiode (18) ist, die Strahlung im für das menschliche Auge sichtbaren Wellenlängenbereich des Spektrums elektromagnetischer Wellen emittiert.

## Claims

1. Device for optical distance measurement: having a transmit unit (12) with a light source (17, 18) for emitting optical radiation (13, 20, 22) towards a target object (15), having a receive unit (14) for receiving the optical radiation (16, 49) returning from the target object (15), and having a control and evaluation unit (56) for determining the optical distance of the device from the target object (15), as well as having at least one optical means for beam guidance (26, 28, 30, 50) of the optical radiation, the arrangement of the at least one optical means for beam guidance (26, 28, 30, 50) and the light source (17, 18) in relation to one another being variable, **characterized in that** the device comprises a regulator (36) which controls the relative arrangement of the at least one optical means (26, 28, 30, 50) and the light source, the device comprising at least one sensor (38) which detects at least one parameter from a group of parameters which consists of the beam divergence, the beam direction and the beam diameter both of the emitted optical radiation (13, 37) and of the returning optical radiation (16, 49), and passes it on to the regulator (36).

2. Device according to Claim 1, **characterized in that** the relative arrangement of the at least one optical means (26, 28, 30, 50) and the light source (17, 18) can be set in all three spatial directions.

3. Device according to Claim 2, **characterized in that** the at least one optical means (26, 28, 30, 50) has an objective (28) .

4. Device according to Claim 3, **characterized in that** the objective (28) is arranged in the beam path of the transmit unit (12) and in the beam path of the receive unit (14).

5. Device according to Claim 3, **characterized in that** the objective (28) is arranged in the beam path of the transmit unit (12) or in the beam path of the receive unit (14) .

6. Device according to one of Claims 1 - 5, **characterized in that** at least one parameter from a group of parameters, which consists both of the divergence and the direction of the optical radiation (13, 37) emitted towards a target object (15) and of the divergence and the direction of the optical radiation (16, 49) returning from the target object (15), can be varied by changing the arrangement of the at least one optical means for beam guidance (26, 28, 30, 50) and the light source (17, 18) in relation to one another.

7. Device according to Claim 3, **characterized in that** the position of the objective (28) with reference to the position of the light source (17, 18) can be set via actuators (34).

8. Device according to Claim 1, **characterized in that** the regulator (36) can be controlled manually.

9. Device according to Claim 1, **characterized in that** the regulator (36) is a constituent of an automatic control loop (39).

10. Device according to one of the preceding claims, **characterized in that** the light source (17, 18) is a laser, in particular a laser diode (18), which emits radiation in the wavelength region of the spectrum of electromagnetic waves which is visible to the human eye.

## Revendications

1. Dispositif de mesure optique de distance comportant une unité d'émission (12) munie d'une source lumineuse (17, 18) pour émettre un rayonnement optique (13, 20, 22) vers un objet cible (15), une unité de réception (14) pour recevoir le rayonnement optique (16, 49) renvoyé par l'objet cible (15) et une unité de commande et d'exploitation (56) pour déterminer la distance optique entre le dispositif et l'objet cible (15) ainsi qu'au moins un moyen optique pour guider le faisceau (26, 28, 30, 50) du rayonnement optique,
la disposition relative du moyen optique pour guider le faisceau (26, 28, 30, 50) et de la source lumineuse (17, 18) pouvant varier réciproquement,
**caractérisé en ce que**
le dispositif comporte un mécanisme de réglage (36) qui commande la disposition relative entre l'au moins un moyen optique (26, 28, 30, 50) et la source lumineuse,
le dispositif comprenant au moins un capteur (38) qui détecte au moins un paramètre d'un groupe de paramètres comprenant la divergence du faisceau, la direction du faisceau et le diamètre du faisceau aussi bien du rayonnement optique émis (13, 37) que du rayonnement optique renvoyé (16, 49), et qui transmet ce paramètre au mécanisme de réglage (36).

2. Dispositif selon la revendication 1,
**caractérisé en ce que**
la disposition relative de l'au moins un moyen optique (26, 28, 30, 50) et de la source lumineuse (17, 18) est réglable dans les trois directions de l'espace.

3. Dispositif selon la revendication 2,
**caractérisé en ce que**
l'au moins un moyen optique (26, 28, 30, 50) comporte un objectif (28).

4. Dispositif selon la revendication 3,
**caractérisé en ce que**
l'objectif (28) est installé dans le chemin du faisceau de l'unité d'émission (12) et dans le chemin du faisceau de l'unité de réception (14).

5. Dispositif selon la revendication 3,
**caractérisé en ce que**
l'objectif (28) est placé dans le chemin du faisceau de l'unité d'émission (12) et dans le chemin du faisceau de l'unité de réception (14).

6. Dispositif selon l'une quelconque des revendications 1 à 5,
**caractérisé en ce qu'**
on peut modifier au moins un paramètre d'un groupe de paramètres composé à la fois de la divergence et de la direction du rayonnement optique (13, 37) envoyé vers un objet cible (15) et de la divergence et de la direction du rayonnement optique (16, 49) renvoyé par l'objet cible (15), en modifiant la disposition relative d'au moins un moyen optique de guidage du faisceau (26, 28, 30, 50) et de la source lumineuse (17, 18).

7. Dispositif selon la revendication 3,
**caractérisé en ce que**
la position de l'objectif (28) par rapport à la position de la source lumineuse (17, 18) se règle par des actionneurs (34).

8. Dispositif selon la revendication 1,
**caractérisé en ce que**
le mécanisme de réglage (36) est à commande manuelle.

9. Dispositif selon la revendication 1,
**caractérisé en ce que**
le mécanisme de réglage (36) fait partie d'un circuit de réglage automatique (39).

10. Dispositif selon l'une quelconque des revendications précédentes,
**caractérisé en ce que**
la source lumineuse (17, 18) est un laser notamment une diode laser (18) qui émet un rayonnement dans une plage de longueur d'onde visible à l'oeil humain dans le spectre des ondes électromagnétiques.
